(19) Europäisches Patentamt
European Patent Office
Office européen des brevets

(11) **EP 2 627 826 B1**

(12) **EUROPÄISCHE PATENTSCHRIFT**

(45) Veröffentlichungstag und Bekanntmachung des Hinweises auf die Patenterteilung:
**03.09.2014   Patentblatt 2014/36**

(51) Int Cl.:
***E01C 19/28*** *(2006.01)*

(21) Anmeldenummer: **10773227.3**

(22) Anmeldetag: **13.10.2010**

(86) Internationale Anmeldenummer:
**PCT/CH2010/000254**

(87) Internationale Veröffentlichungsnummer:
**WO 2012/048433 (19.04.2012 Gazette 2012/16)**

(54) **VERFAHREN ZUR ERMITTLUNG DER STEIFIGKEIT UND/ODER DÄMPFUNG EINES BEREICHS EINER KÖRPERLICHKEIT**

METHOD FOR DETERMINIG THE RIGIDITY AND/OR THE DAMPING OF THE REGION OF A SOLIDITY

MÉTHODE POUR LA DÉTERMINATION DE LA RIGIDITÉ ET/OU DE L'AMORTISSEMENT D'UN DOMAINE D'UNE SOLIDITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.08.2013   Patentblatt 2013/34**

(73) Patentinhaber: **Ammann Schweiz AG**
**4900 Langenthal (CH)**

(72) Erfinder:
• **ANDEREGG, Roland**
**CH-4600 Olten (CH)**
• **GERHARD, Martin**
**CH-5443 Niederrohrdorf (CH)**
• **KAUFMANN, Kuno**
**CH-4553 Subingen (CH)**

(74) Vertreter: **Münch, Martin Walter**
**c/o E.Blum & CO. AG**
**Vorderberg 11**
**8044 Zürich (CH)**

(56) Entgegenhaltungen:
**EP-A1- 1 516 961     WO-A1-2007/096118**

EP 2 627 826 B1

**Beschreibung**

## TECHNISCHES GEBIET

Die Erfindung betrifft ein Verfahren zur Ermittlung der Steifigkeit und/oder Dämpfung eines Bereichs einer Körperlichkeit und eine Vorrichtung zur Durchführung des Verfahrens gemäss den Oberbegriffen der unabhängigen Patentansprüche.

## STAND DER TECHNIK

Es ist allgemein bekannt, dass man bei schwingfähigen Systemen die Steifigkeit und Dämpfung einer schwingfähigen Ankopplung bei Kenntnis der Schwingungsanregung und der Schwingungsantwort berechnen kann.

Im Bereich der Bodenverdichtung nutzt man diese Möglichkeit, wie zum Beispiel in WO 2007 096118 A beschrieben, um aus bekannten Parametern der Verdichtungsmaschine und beim Verdichten ermittelten Parametern der Schwingungsanregung des Unwuchterregers der Maschine und der Schwingungsantwort des Kontaktkörpers (Walze oder Bodenplatte) der Maschine die Bodensteifigkeit zu berechnen und so Rückschlüsse auf den Grad der Verdichtung des Bodens ziehen zu können.

Hierbei ergibt sich jedoch aufgrund der einseitigen Bindung zwischen dem Boden und dem Kontaktkörper der Verdichtungsmaschine das Problem, dass je nach Bodensteifigkeit und Betriebsweise der Verdichtungsmaschine drei verschiedene Betriebszustände auftreten können.

In einem ersten Zustand, welcher auch als "Auflastbetrieb" bezeichnet wird, besteht beim Einwirken mit dem Kontaktkörper auf den Boden jederzeit Kontakt zwischen dem Kontaktkörper und dem Boden.

In einem zweiten Zustand, welcher auch als "periodisches Abheben" bezeichnet wird, kommt es beim Einwirken mit dem Kontaktkörper auf den Boden in gleichmässigen Zeitabständen zu einem Kontaktverlust zwischen dem Kontaktkörper und dem Boden.

In einem dritten Zustand, welcher auch als "Springen" bezeichnet wird, kommt es beim Einwirken mit dem Kontaktkörper auf den Boden in ungleichmässigen Zeitabständen zu einem Kontaktverlust zwischen dem Kontaktkörper und dem Boden.

Die drei zuvor beschriebenen Betriebszustände können grundsätzlich bei allen schwingfähigen Systemen mit einer einseitigen Bindung auftreten.

## GARSTELLUNG DER ERFINDUNG

Da man bisher davon ausgegangen ist, dass eine Berechnung der Steifigkeit mit Parametern, welche im Betriebszustand des Springens ermittelt werden, nicht möglich ist, war die Ermittlung der Bodensteifigkeit während dem Verdichten auf die Betriebszustände "Auflastbetrieb" und "periodisches Abheben" beschränkt und damit auf teure, geregelte Verdichtungsmaschinen, welche durch die Maschinensteuerung automatisch immer in den letztgenannten Betriebszuständen gehalten werden und kein Springen zulassen.

Überraschenderweise hat sich nun gezeigt, dass bei schwingfähigen Systemen mit einseitiger Bindung eine Berechnung der Steifigkeit und der Dämpfung auch mit Parametern der Schwingungsanregung und der Schwingungsantwort möglich ist, welche im Betriebszustand des Springens ermittelt werden. Hierdurch eröffnet sich im Bereich der Bodenverdichtung nun die Möglichkeit, in sämtlichen Betriebszuständen die Bodensteifigkeit zuverlässig zu ermitteln, so dass es sinnvoll wird, auch ungeregelte Verdichtungsmaschinen, wie z.B. einfache Vibrationsplatten, bei denen im Betrieb oftmals der Zustand des Springens auftritt, mit entsprechender Mess- und Auswertungselektronik auszurüsten.

Ein erster Aspekt der Erfindung betrifft ein Verfahren zur Ermittlung der Steifigkeit und/oder Dämpfung eines Bereichs einer Körperlichkeit, wie z.B. eines verdichteten oder zu verdichtenden Bodens oder einer zu durchbohrenden Gebäudewand. Im Bereich der Bodenverdichtung ist die Kenntnis der Bodensteifigkeit bzw. Bodendämpfung wünschenswert, weil sie zuverlässige Rückschlüsse auf die Tragfähigkeit bzw. den Verdichtungsgrad des Bodens erlaubt und damit bauliche Mängel und unnötige Arbeitsschritte vermeiden hilft. Im Bereich der Bohrtechnik ist die Kenntnis der Steifigkeit bzw. Dämpfung des gerade mit dem Bohrer bearbeiteten Wandabschnitts wünschenswert, da sie Rückschlüsse auf dessen Material erlaubt und so, z.B. über ein geeignetes Warn- bzw. Regelsystem, ein versehentliches Anbohren von in der Wand verlaufenden Leitungen verhindert werden kann.

Gemäss dem erfindungsgemässen Verfahren wird ein Kontaktkörper mit einem Unwuchterreger zu Schwingungen angeregt und mit dem schwingungsangeregten Kontaktkörper auf eine Kontaktfläche des Bereichs, dessen Steifigkeit und/oder Dämpfung ermittelt werden soll, in einer im Wesentlichen senkrecht zu der Kontaktfläche verlaufenden Richtung eingewirkt. Dabei ist die Schwingungsanregung durch den Unwuchterreger derartig, dass es infolge dieser Schwingungsanregung während dem Einwirken zu einem ungleichmässigen Kontaktverlust zwischen der Kontaktfläche und dem Kontaktkörper kommt. Es kommt also während dem Einwirken auf die Kontaktfläche zu einem "Springen" des Kontaktkörpers auf der Kontaktfläche. In diesem Zustand werden Parameter der Schwingungsanregung des Unwuchterregers und der Schwingungsantwort des Kontaktkörpers ermittelt und anschliessend die Steifigkeit und/oder Dämpfung des Bereichs aus den so ermittelten Parametern der Schwingungsanregung des Unwuchterregers und der Schwingungsantwort des Kontaktkörpers und aus bekannten Parametern des Systems Unwuchterreger-Kontaktkörper berechnet.

Dabei werden als Parameter der Schwingungsanregung und der Schwingungsantwort ein Drehimpuls des Unwuchterregers und der Verlauf der Beschleunigung des Kontaktkörpers in Einwirkungsrichtung ermittelt und aus diesen Parametern wird zusammen mit bekannten Parametern des Systems Unwuchterreger-Kontaktkörper, wie z.B. der Masse des Unwuchterreger, des Schwerpunktsabstands der Unwuchtmasse vom Rotationszentrum und der Masse des Kontaktkörpers, die Steifigkeit und/oder Dämpfung des Bereichs der Körperlichkeit, auf den eingewirkt wird, ermittelt.

Die Schwingungsantwort des Kontaktkörpers wird dabei durch zweifache Integration der ermittelten Beschleunigung des Kontaktkörpers ermittelt und sodann aus dieser der Anteil der Erregerfrequenz an der Schwingungsantwort des Kontaktkörpers durch Filtern bzw. FFT-Analyse ermittelt. Es hat sich gezeigt, dass ausgehend von diesem Anteil der Erregerfrequenz an der Schwingungsantwort des Kontaktkörpers eine Berechnung der Steifigkeit und der Dämpfung auch im Betriebszustand des Springens möglich ist.

Hierzu wird gemäss einer ersten bevorzugten Variante des Verfahrens die Amplitude des Anteils der Erregerfrequenz an der Schwingungsantwort des Kontaktkörpers und der Nacheilwinkel dieses Anteils gegenüber der Schwingungsanregung ermittelt und sodann unter Kenntnis der Masse der Kontaktkörper, der Masse der Unwucht, des Schwerpunktsabstands der Unwuchtmasse vom Rotationszentrum sowie der Erregerfrequenz die Bodensteifigkeit $k_B$ gemäss oder unter Einbezug der folgenden Formel berechnet:

$$k_B = 4\pi^2 f^2 \left( m_d + \frac{m_u \, r_u \, \cos\varphi}{A_1} \right)$$

Dabei ist f die Erregerfrequenz, $m_d$ die Masse des Kontaktkörpers, $m_u$ die Masse der Unwucht, $r_u$ der Schwerpunktsabstand der Masse der Unwucht vom Rotationszentrum, $\varphi$ der Nacheilwinkel des Anteils der Erregerfrequenz an der Schwingungsantwort des Kontaktkörpers, gegenüber der Schwingungsanregung und A1 die Amplitude des Anteils der Erregerfrequenz an der Schwingungsantwort des Kontaktkörpers.

In einer anderen bevorzugten Variante des Verfahrens wird aus ermittelten Parametern der Schwingungsanregung des Unwuchterregers und/oder der Schwingungsantwort des Kontaktkörpers und aus bekannten Parametern der Einwirkanordnung vor der Berechnung der Steifigkeit und/oder Dämpfung zuerst das Verhältnis der entgegen der Schwerkraftrichtung wirkenden dynamischen Kräfte zu den in Schwerkraftrichtung wirkenden Gewichtskräften ermittelt. In Abhängigkeit von diesem Verhältnis werden sodann verschiedene Formeln zur Berechnung der Steifigkeit und/oder Dämpfung verwendet. Diese Verfahrensvariante weist den Vorteil auf, dass sie die Berücksichtigung bestimmter, sich in Abhängigkeit von diesem Kräfteverhältnis verändernder Faktoren, wie z.B. der Einfluss tiefer gelegener Bodenschichten im Falle einer Bodenverdichtung, ermöglicht und damit insbesondere für die Betriebzustände "periodisches Abheben" und "Springen" eine genauere Berechnung als die erste Variante möglich macht.

Bevorzugterweise werden hierzu die Amplitude des Anteils der Erregerfrequenz an der Schwingungsantwort des Kontaktkörpers und der Nacheilwinkel des Anteils der Erregerfrequenz an der Schwingungsantwort des Kontaktkörpers gegenüber der Schwingungsanregung ermittelt. Sodann wird unter Kenntnis der Masse des Kontaktkörpers, der Masse der Unwucht, des Schwerpunktsabstands der Unwuchtmasse vom Rotationszentrum, der durch den Chassis-Rahmen auf den Walzenkörper wirkenden Masse sowie der Erregerfrequenz gemäss oder unter Einbezug der folgenden Formel ein Kennwert Φ errechnet, welcher die entgegen der Schwerkraftrichtung wirkenden dynamischen Kräfte ins Verhältnis zu den in Schwerkraftrichtung wirkenden Gewichtskräften setzt:

$$\Phi = \frac{4\pi^2 f^2 m_u r_u \sqrt{\left(\frac{A_1}{A_0}\right)^2 + 1 + 2\left(\frac{A_1}{A_0}\right)\cos\varphi}}{(m_f + m_d)g}$$

Dabei ist f die Erregerfrequenz, $m_u$ die Masse der Unwucht, $r_u$ der Schwerpunktsabstand der Masse der Unwucht vom Rotationszentrum, $\varphi$ der Nacheilwinkel des Anteils der Erregerfrequenz an der Schwingungsantwort des Kontaktkörpers gegenüber der Schwingungsanregung, A1 die Amplitude des Anteils der Erregerfrequenz an der Schwingungsantwort des Kontaktkörpers, $m_f$ die durch den Chassis-Rahmen auf den Walzenkörper wirkende Masse, $m_d$ die Masse des Kontaktkörpers und g die Erdbeschleunigung.

Der Parameter $A_0$ wird gemäss oder unter Einbezug der folgenden Formel errechnet:

$$A_0 = \frac{m_u r_u}{m_d}$$

Ein derartig berechneter Kennwert $\Phi$ hat sich insbesondere im Bereich der Bodenverdichtungsmaschinen als besonders geeignet erwiesen, insbesondere dann, wenn bei einer Grösse des Kennwerts $\Phi$ von kleiner 1 eine andere Formel zur Berechnung der Steifigkeit und/oder Dämpfung verwendet wird als bei einer Grösse des Kennwerts $\Phi$ von grösser 1.

Bei einer Grösse des Kennwerts $\Phi$ von kleiner 1 wird die Steifigkeit bevorzugterweise gemäss der Formel der ersten Variante des Verfahrens berechnet.

Bei einer Grösse des Kennwerts $\Phi$ von grösser 1 wird die Steifigkeit bevorzugterweise gemäss oder unter Einbezug folgender Formel berechnet:

$$k_B = \frac{4\pi^2 f^2 (A_1 m_d + m_u r_u \cos\varphi)}{A_1 \left(1 + \cos\left\{\frac{\pi}{2}\left(\frac{\Phi - 1}{1{,}14}\right)^K\right\}\right)}$$

Dabei ist f die Erregerfrequenz, $m_u$ die Masse der Unwucht, $r_u$ der Schwerpunktsabstand der Masse der Unwucht vom Rotationszentrum, $\varphi$ der Nacheilwinkel des Anteils der Erregerfrequenz an der Schwingungsantwort des Kontaktkörpers gegenüber der Schwingungsanregung, A1 die Amplitude des Anteils der Erregerfrequenz an der Schwingungsantwort des Kontaktkörpers, $m_d$ die Masse des Kontaktkörpers und K ein empirischer Faktor zwischen 0.3 und 0.5.

Mit Vorteil werden bei unterschiedlichen Grössen des Kennwert $\Phi$ unterschiedliche empirische Faktoren K verwendet, und zwar bevorzugterweise bei einer Grösse des Kennwerts $\Phi$ zwischen 1 und 2 ein erster empirischer Faktor K und bei einer Grösse des Kennwerts $\Phi$ grösser 2.5 ein anderer empirischer Faktor K, welcher kleiner ist als der erste empirische Faktor K. Im Bereich der Bodenverdichtungsmaschinen hat es sich beispielsweise als vorteilhaft erwiesen, bei einem Kennwert $\Phi$ zwischen 1 und n-1 (2,1415) einen Faktor K von 0.45 zu verwenden und bei einem Kennwert Φ von grösser n-1 (2,1415) einen Faktor K von 0.36.

In einer weiteren bevorzugten Ausführungsform werden neben dem Anteil der Erregerfrequenz an der Schwingungsantwort des Kontaktkörpers zusätzlich etwaige vorhandene Anteile anderer Frequenzen, welche tiefer als die Erregerfrequenz sind, insbesondere welche Bruchteile der Erregerfrequenz f sind (z.B. f/2, f/3, f/4, etc.), an der Schwingungsantwort des Kontaktkörpers ermittelt. Bei Erkennung einer substantiellen Grösse solcher Anteile wird sodann in Abhängigkeit vom Ermittlungsergebnis Einfluss auf die Berechnung der Steifigkeit und/oder Dämpfung genommen, z.B. indem ein Korrekturfaktor in einer Formel angepasst wird oder indem die weitere Berechnung abgebrochen wird.

Wird z.B. ein deutlicher Anteil der Eigenfrequenz einer schwingfähig in Einwirkrichtung mit dem Kontaktkörper verbundenen Masse und/oder ein deutlicher Anteil einer im Sinne der Periodenverdoppelung nicht subharmonischen Frequenz kleiner der Erregungsfrequenz f (z.B. f/3, f/5, etc) ermittelt, so lässt dies auf einen chaotischen Schwingungszustand schliessen und es ist bevorzugt, dass in diesem Fall ein Regeleingriff am Unwuchterreger zur Herstellung eines zulässigen Betriebszustands erfolgt und/oder keine Berechnung der Steifigkeit und/oder Dämpfung erfolgt, weil die Ergebnisse der Berechnung dann falsch wären.

Weiter ist es beim erfindungsgemässen Verfahren bevorzugt, dass die Parameter der Schwingungsanregung des Unwuchterregers und der Schwingungsantwort des Kontaktkörpers fortlaufend ermittelt und fortlaufend aus diesen Parametern die Steifigkeit und/oder Dämpfung des Bereichs der Körperlichkeit, auf den eingewirkt wird, berechnet werden. Hierdurch ergibt sich, insbesondere bei Ausführungsformen des Verfahrens bei denen die Kontaktfläche während dem Einwirken gleichzeitig bearbeitet wird, der Vorteil, dass eine Überwachung des Bearbeitungserfolgs und/oder der Bearbeitungsbedingungen möglich wird.

In noch einer weiteren bevorzugten Ausführungsform des Verfahrens wird die ermittelte Steifigkeit und/oder Dämpfung wahrnehmbar gemacht, bevorzugterweise visuell wahrnehmbar gemacht, was bevorzugterweise dadurch geschieht, dass diese als Zahlenwert oder als grössenvariabler Balken dargestellt wird. Hierdurch ist es einer das Verfahren durchführenden Person möglich, die absolute oder relative Grösse der ermittelten Steifigkeit und/oder Dämpfung wahrzunehmen und gegebenenfalls in Abhängigkeit davon bestimmte Verfahrensparameter zu verändern oder das Verfahren zu beenden. Natürlich ist es auch vorgesehen, zusätzlich andere Parameter und Prozesswerte insbesondere visuell wahrnehmbar zu machen, wie z.B. die maximale Kontaktflächenreaktionskraft oder die Drehfrequenz des Unwuchterregers.

Besonders bevorzugt sind Ausführungsformen des Verfahrens, bei denen mit der Bodenplatte einer Vibrationsplatte oder dem Walzenkörper einer Vibrationswalze als Kontaktkörper auf die Oberfläche eines bevorzugterweise verdichteten und/oder zu verdichtenden Bereichs eines Bodens eingewirkt wird und die Bodensteifigkeit und/oder Bodendämpfung des Bodenbereichs berechnet wird. Bei derartigen Ausführungsformen treten die Vorteile des erfindungsgemässen Verfahrens besonders deutlich zu Tage, da die Bodensteifigkeit bzw. Bodendämpfung Rückschlüsse auf den Verdichtungsgrad des Bodens zulässt, und so z.B. eine unzureichende Bodenverdichtung erkannt werden kann oder z.B. unnötige Verdichtungsarbeiten vermieden werden können.

In der zuvor beschriebenen Ausführungsform betrifft die Erfindung also ein Verfahren zur Ermittlung der Bodensteifigkeit und/oder Bodendämpfung eines Bodenbereichs, bei welchem mit einem vibrationserregten Kontaktkörper einer Bodenverdichtungsvorrichtung derartig auf die Bodenoberfläche eingewirkt wird, dass es während dem Einwirken zu einem ungleichmässigen Kontaktverlust zwischen der Bodenoberfläche und dem Kontaktkörper kommt. Während diesem Einwirken werden Parameter der Schwingungsanregung und Parameter der Schwingungsantwort des Kontaktkörpers ermittelt und aus diesen in Kombination mit bekannten Parametern der Bodenverdichtungsvorrichtung die Bodensteifigkeit und/oder Bodendämpfung berechnet.

Bevorzugterweise wird die Bodenplatte der Vibrationsplatte oder der Walzenkörper der Vibrationswalze während dem Einwirken über die Oberfläche des Bodenbereichs bewegt. Dies ist insbesondere bei Ausführungsformen des Verfahrens, bei denen fortlaufend die Bödensteifigkeit und/oder die Bodendämpfung ermittelt wird, von Vorteil, weil so das Bodensteifigkeits- bzw. Bodendämpfungsprofil eines relativ grossen Bodenbereichs ermittelt werden kann.

Auch ist es bevorzugt, dass der Bodenbereich beim Einwirken auf seine Oberfläche mit der Bodenplatte der Vibrationsplatte oder mit dem Walzenkörper der Vibrationswalze verdichtet wird. Auf diese Weise ist es möglich, Verdichtungsarbeiten durchzuführen und gleichzeitig das Verdichtungsergebnis zu überprüfen.

In noch einer weiteren bevorzugten Ausführungsform des Verfahrens erfolgt das Einwirken auf die Kontaktfläche im Wesentlichen in Schwerkraftrichtung, d.h. die Schwerkraft wirkt im Wesentlichen senkrecht zur Kontaktfläche. Dies hat den Vorteil, dass der Kontaktkörper ohne zusätzliche senkrecht zur Kontaktfläche wirkende Anpresskräfte automatisch immer wieder in Kontakt mit der Kontaktfläche kommt.

In noch einer weiteren bevorzugten Ausführungsform des Verfahrens wird als Kontaktkörper ein Werkzeug verwendet, mit welchem der Bereich, dessen Steifigkeit und/oder Dämpfung ermittelt werden soll, während dem Einwirken bearbeitet wird, und zwar bevorzugterweise verdichtet (z.B. Bodenverdichtung) oder zertrümmert (z.B. Bohren) wird. Hierdurch ergibt sich der Vorteil, dass eine Bearbeitung zeitgleich mit dem Ermitteln der Steifigkeit und/oder der Dämpfung erfolgt und dass die Intensität der Bearbeitung in Abhängigkeit von den ermittelten Steifigkeits- bzw. Dämpfungswerten eingestellt werden kann.

In noch einer weiteren bevorzugten Ausführungsform des Verfahrens wird der Unwuchterreger während dem Ermitteln der Parameter der Schwingungsanregung des Unwuchterregers und der Schwingungsantwort des Kontaktkörpers derartig betrieben, dass die Schwingungsanregung des Kontaktkörpers im Wesentlichen konstant ist. Dies erfolgt am einfachsten mit einem ungeregelten Unwuchterreger und erlaubt die kostengünstige Bereitstellung geeigneter Vorrichtungen zur Durchführung des erfindungsgemässen Verfahrens.

Bevorzugterweise erfolgt das Einwirken auf die Kontaktfläche mit dem Kontaktkörper derartig, dass es infolge der Schwingungsanregung des Unwuchterregers während dem Einwirken zeitweise zu einem gleichmässigen Kontaktverlust, also zum Betriebszustand "periodisches Abheben", und/oder zu keinem Kontaktverlust, also zum Betriebszustand "Auflastbetrieb", zwischen der Kontaktfläche und dem Kontaktkörper kommt. Insbesondere in Bereich der Bodenverdichtung ist diese Ausführungsform besonders vorteilhaft, weil so die Steifigkeit bzw. Dämpfung in allen möglichen Betriebszuständen ermittelt wird.

Ein zweiter Aspekt der Erfindung betrifft eine Vorrichtung zur Durchführung des Verfahrens gemäss dem ersten Aspekt der Erfindung. Die Vorrichtung umfasst einen Kontaktkörper zum Einwirken auf eine Kontaktfläche des Bereichs, dessen Steifigkeit und/oder Dämpfung ermittelt werden soll, in einer im Wesentlichen senkrecht zur Kontaktfläche verlaufenden Richtung sowie einen Unwuchterreger, mit welchem der Kontaktkörper derartig zu Schwingungen angeregt werden kann, dass es beim bestimmungsgemässen Einwirken auf die Kontaktfläche infolge dieser Schwingungsanregung zu einem ungleichmässigen Kontaktverlust (Springen) zwischen der Kontaktfläche und dem Kontaktkörper kommt bzw. kommen kann. Der Unwuchterreger ist bevorzugterweise ein ungeregelter Unwuchterreger, da solche Unwuchterreger kostengünstig und robust sind.

Weiter umfasst die Vorrichtung Messmittel zur Ermittlung von Parametern der Schwingungsanregung des Unwuchterregers (z.B. Drehimpuls) und von Parametern der Schwingungsantwort des Kontaktkörpers (z.B. Beschleunigungsverlauf des Kontaktkörpers in Einwirkungsrichtung) während einem Einwirken auf die Kontaktfläche unter ungleichmässigem Kontaktverlust (Springen) zwischen der Kontaktfläche und dem Kontaktkörper.

Auch weist die Vorrichtung Auswertemittel auf zum Berechnen der Steifigkeit und/oder Dämpfung des Bereichs der Körperlichkeit mit den während dem Einwirken auf die Kontaktfläche unter ungleichmässigem Kontaktverlust (Springen) zwischen der Kontaktfläche und dem Kontaktkörper ermittelten Parametern der Schwingungsanregung des Unwuchterregers und der Schwingungsantwort des Kontaktkörpers.

Bevorzugterweise sind die Messmittel und die Auswertemittel derartig ausgestaltet, dass eine fortlaufende Ermittlung der Parametern der Schwingungsanregung des Unwuchterregers und der Schwingungsantwort des Kontaktkörpers und eine fortlaufende Berechnung der Steifigkeit und/oder Dämpfung des Bereichs der Körperlichkeit erfolgen kann.

In einer bevorzugten Ausführungsform der Vorrichtung sind die Messmittel und die Auswertemittel derart ausgestaltet, dass sie zusätzlich geeignet sind zur Ermittlung der Parameter und zum Berechnen der Steifigkeit und/oder Dämpfung während einem Einwirken auf die Kontaktfläche unter einem gleichmässigen Kontaktverlust (periodisches Abheben) und/oder unter keinem Kontaktverlust (Auflastbetrieb) zwischen der Kontaktfläche und dem Kontaktkörper. Somit können die Steifigkeit und/oder die Dämpfung in sämtlichen Betriebszuständen, die beim bestimmungsgemässen Betrieb der Vorrichtung auftreten können, ermittelt werden.

Auch ist es bevorzugt, dass die Vorrichtung Mittel aufweist zur visuellen Wahrnehmbarmachung der ermittelten Steifigkeit und/oder Dämpfung. Hierzu weist sie mit Vorteil ein Display auf, auf welchem ein Zahlenwert für die Steifigkeit und/oder Dämpfung dargestellt wird oder ein Balken, dessen Länge die Steifigkeit und/oder Dämpfung repräsentiert. Hierdurch kann der Bediener der Vorrichtung die absolute oder relative Grösse der Steifigkeit und/oder Dämpfung an der Maschine ablesen und gegebenenfalls in Abhängigkeit davon Einfluss auf Betriebsparameter der Maschine nehmen oder deren Betrieb stoppen. Auch ist es vorgesehen, die Vorrichtung mit Mitteln zur visuellen Wahrnehmbarmachung anderer Parameter und Prozesswerte auszurüsten, wie z.B. der maximale Kontaktflächenreaktionskraft oder der Drehfrequenz des Unwuchterregers.

Grundsätzlich ist es auch vorgesehen, die Vorrichtung mit Mittel zur Ausübung weiterer Funktionen wie z.B. Datenerfassung, Datenspeicherung, Datensicherung, Datenanalyse und Datenübertragung (z.B. Schnittstelle gegen aussen CAN-Bus) auszurüsten, und bei Bodenverdichtungsanwendungen z.B. auch mit einer Positionserfassung über GPS. Hierdurch kann die Dokumentation und Auswertung der ermittelten Steifigkeiten und/oder Dämpfungen zusammen mit zugeordneten Daten vereinfacht bzw. automatisiert werden.

In einer weiteren bevorzugten Ausführungsform der Vorrichtung ist der Kontaktkörper von einem Werkzeug zur Bearbeitung des Bereichs der Körperlichkeit gebildet. Bei der Vorrichtung handelt es sich also um eine Maschine zur Bearbeitung der Kontaktfläche, und zwar bevorzugterweise um eine Vibrationsplatte oder eine Vibrationswalze, deren Bodenplatte oder Walzenkörper den Kontaktkörper bildet. Bei derartigen Vorrichtungen treten die Vorteile der Erfindung besonders deutlich zu Tage.

Weiter ist es bevorzugt, dass der Unwuchterreger der Vorrichtung ein Kreisschwinger oder ein Richtschwinger ist, bevorzugterweise ein Richtschwinger mit einer verstellbaren Erregungskraftrichtung.

## KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:

Fig. 1 eine Seitenansicht eines erfindungsgemässen Walzenzugs zur Bodenverdichtung; und
Fig. 2 das schwingungstechnische Modell des schwingfähigen Systems Walzenzug-Boden aus Fig. 1.

## WEGE ZUR AUSFÜHRUNG DER ERFINDUNG

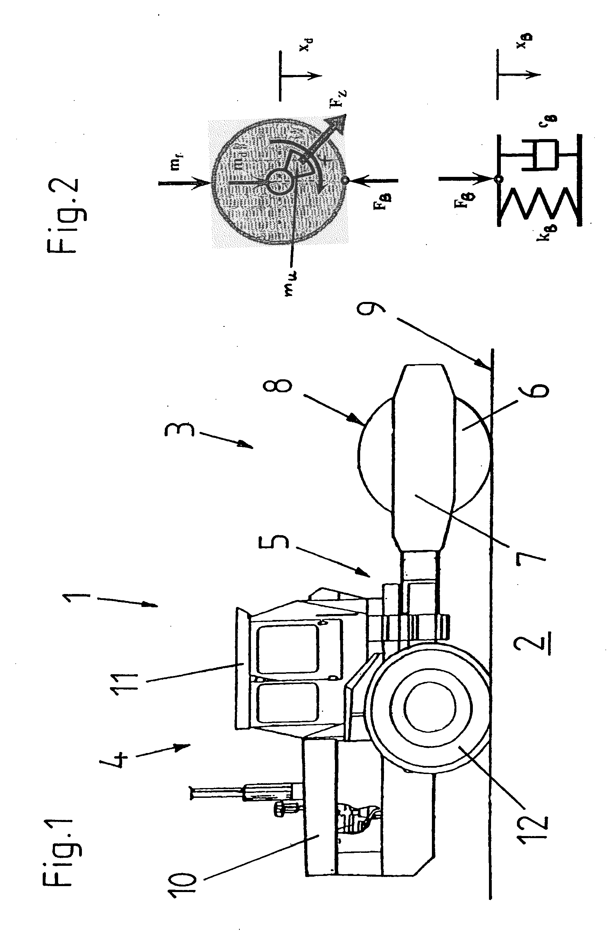

Fig. 1 zeigt eine erfindungsgemässe Vorrichtung in Form eines Walzenzugs 1 zur Bodenverdichtung in der Seitenansicht und Fig. 2 schematisch das schwingungstechnische Modell des schwingfähigen Systems gebildet aus dem Walzenzug 1 und dem unter dessen Walze 6 angeordneten Boden 2.

Wie zu erkennen ist, weist der Walzenzug 1 einen Vorderteil 3 und einen Hinterteil 4 auf, welche über ein Knickgelenk 5 miteinander verbunden sind.

Der Vorderteil 3 des Walzenzugs 1 besteht im Wesentlichen aus einem Walzenkörper 6 und einem Chassis-Rahmen 7.

Der Walzenkörper 6 umfasst eine Bandage 8 (anspruchsgemässer Kontaktkörper), welche auf der Oberfläche 9 (anspruchsgemässe Kontaktfläche) des zu verdichtenden Bodens 2 aufsteht. In der Bandage 8 angeordnet ist ein als Kreisschwinger ausgebildeter, von einem Hydraulikmotor antreibbarer Unwuchterreger (nicht gezeigt), mit welchem die Bandage 8 derartig zu Schwingungen angeregt werden kann, dass es zu einem ungleichmässigen Kontaktverlust (Springen) zwischen der Bandage 8 und der Bodenoberfläche 9 kommt

Der Chassis-Rahmen 7 stützt sich in Schwerkraftrichtung auf den beiden endseitigen Lagern des Walzenkörpers 6 ab und ist über schwingungsisolierende Befestigungselemente mit dem Knickgelenk 5 verbunden, welches vom Hinterteil 4 des Walzenzugs getragen wird. Die schwingungsisolierenden Befestigungselemente sind derartig ausgelegt, dass das Hinterteil 4 des Walzenzugs mit dem Chassis-Rahmen 7 eine zusammenhängende Einheit bildet, jedoch schwingungsmässig im Wesentlichen von diesem entkoppelt ist.

Der Hinterteil 4 des Walzenzugs besteht im Wesentlichen aus einem Antriebsaggregat 10 mit einem Dieselmotor, welcher eine Hydraulikpumpe antreibt, und einer Führerkabine 11. Er stützt sich über zwei von Hydraulikmotoren angetriebene Antriebsräder 12 auf dem Boden 2 ab. Die Hydraulikpumpe versorgt im Betrieb über Hydraulikschläuche den Hydraulikmotor des Unwuchterregers des Walzenkörpers 6 sowie die Hydraulikmotoren der Antriebsräder 12 jeweils mit einem Strom von unter Druck stehender Hydraulikflüssigkeit, zum Antreiben der Antriebsräder 12 und des Unwuchterregers des Walzenkörpers 6.

Im schwingungstechnischen Modell gemäss Fig. 2 ist die Masse des Walzenkörpers 6, d.h. der Bandage 8 mit dem darin angeordneten Unwuchterreger, mit $m_d$ bezeichnet, die durch den Chassis-Rahmen 7 auf den Walzenkörper 6 wirkende Masse mit $m_f$, die Unwuchtmasse des Unwuchterregers mit $m_u$, die durch die Unwuchtmasse $m_u$ erzeugte Fliehkraft mit $F_z$, die auf die Oberfläche 9 des Bodens 2 wirkende Bodenreaktionskraft mit $F_B$, die Steifigkeit des Bodens 2 mit $k_B$, die Dämpfung des Bodens 2 mit $c_B$, die Bewegung der Bandage 8 in vertikaler Richtung (senkrecht zur Bodenoberfläche 9) mit $x_d$, die Bewegung der Oberfläche 9 des Bodens 2 in vertikaler Richtung mit $x_B$ und die Drehfrequenz der Unwuchtmasse des Unwuchterregers mit f.

Weiter ist der Walzenzug 1 mit Mitteln zur fortlaufenden Ermittlung der Drehfrequenz f der Unwuchtmasse $m_u$ des Unwuchterregers (Parameter der Unwuchtanregung des Unwuchterregers) und der Beschleunigung $\ddot{x}_d$ in vertikaler Richtung der Bandage 8 des Walzenkörpers 6 (Parameter der Schwingungsantwort des Kontaktkörpers) ausgerüstet, sowie mit einer Auswerteeinheit, mit welcher aus diesen beiden ermittelten Parametern zusammen mit bekannten Parametern des Walzenzugs 1 fortlaufend die Bodensteifigkeit $k_B$ und die Bodendämpfung $c_B$ berechnet werden kann. Die ermittelten Daten werden am Bedienpult des Walzenzugs 1 visuell wahrnehmbar gemacht sowie je nach Ausrüstung dokumentiert und gespeichert. Optional ist auch ein GPS-System vorhanden, mit welchem diese Daten zusammen mit anderen Maschinendaten orts- und zeitgenau dokumentiert werden können.

Die Ermittlung der zuvor genannten Parameter und die Berechnung der Bodensteifigkeit $k_B$ und Bodendämpfung $c_B$ ist in den drei Betriebszuständen Auflastbetrieb, periodisches Abheben und Springen möglich, sowohl im Stand als auch während der Fahrt.

Im einfachsten Fall geschieht dies wie folgt: Im Unwuchterreger wird mit einem Impulssensor bei jeder Umdrehung der Unwuchtwelle ein Impuls erzeugt, dessen Takt der Drehfrequenz f der Unwuchtmasse $m_u$ entspricht. Mit einem auf einem Lagerbock des Walzenkörpers 6 angeordneten Beschleunigungssensor wird der Verlauf der Beschleunigung $\ddot{x}_d$ der Bandage 8 in vertikaler Richtung in Form eines Spannungssignals ermittelt.

Dieses Spannungssignal wird digitalisiert und zweifach integriert, so dass sich der zeitliche Verlauf und die Grösse der Schwingungsbewegung $x_d$ der Bandage 8 ergibt. Dieser Verlauf stellt die Schwingungsantwort $x_d$ des schwingfähigen Systems auf die Schwingungsanregung des Unwuchterregers dar.

Aus dem so erhaltenen Verlauf der Schwingungsbewegung $x_d$ der Bandage 8 wird durch FFT-Analyse bzw. Filtern der zeitliche Verlauf des Anteils der Erregerfrequenz f an der Schwingungsantwort $x_d$ der Bandage 8 und dessen Amplitude A1 ermittelt.

Aus Kenntnis der Einbaulage des Impulsgebers und der Winkelposition, welche das Unwuchtgewicht des Unwuchterregers zum Zeitpunkt des Impulses aufweist, wird der zeitliche Verlauf der Erregerkraft des Unwuchterregers ermittelt. Aus einem Vergleich des zeitlichen Verlaufs der Erregerkraft mit dem zeitlichen Verlauf des Anteils der Erregerfrequenz f an der Schwingungsantwort $x_d$ der Bandage 8 wird sodann der Nacheilwinkel $\varphi$ des Anteils der Erregerfrequenz f an der Schwingungsantwort $x_d$ der Bandage 8 gegenüber der Schwingungsanregung durch den Unwuchterreger ermittelt. Unter Kenntnis der vom Chassis-Rahmen 7 auf den Walzenkörper 6 wirkenden Masse $m_f$, der Masse $m_d$ des Walzenkörpers 6, der Masse $m_u$ der Unwucht, des Schwerpunktsabstands $r_u$ der Unwuchtmasse vom Rotationszentrum sowie der Erregerfrequenz f kann nun die Bodensteifigkeit $k_B$ für die drei Betriebszustände Auflastbetrieb, periodisches Abheben und Springen mit ausreichender Genauigkeit gemäss oder unter Einbezug folgender Formel berechnet werden:

$$k_B = 4\pi^2 f^2 \left( m_d + \frac{m_u \, r_u \cos\varphi}{A_1} \right)$$

Wird eine genauere Ermittlung der Bodensteifigkeit $k_B$ in den drei Betriebszuständen Auflastbetrieb, periodisches Abheben und Springen gewünscht, so wird gemäss oder unter Einbezug der folgenden Formel ein Kennwert $\Phi$ gebildet, welcher die entgegen der Schwerkraftrichtung wirkenden dynamischen Kräfte ins Verhältnis zu den in Schwerkraftrichtung wirkenden Gewichtskräften setzt:

$$\Phi = \frac{4\pi^2 f^2 m_u \, r_u \sqrt{\left(\frac{A_1}{A_0}\right)^2 + 1 + 2\left(\frac{A_1}{A_0}\right)\cos\varphi}}{(m_f + m_d)\,g}$$

Dabei wird der Parameter $A_0$ gemäss oder unter Einbezug folgender Formel berechnet:

$$A_0 = \frac{m_u \, r_u}{m_d}$$

Ist der Kennwert $\Phi$ kleiner als 1, so sind die Gewichtskräfte grösser als die periodisch entgegen der Schwerkraftrichtung wirkenden Kräfte und es liegt Auflastbetrieb vor. In diesem Fall wird die Bodensteifigkeit $k_B$ mit der zuvor dargelegten Formel berechnet.

Ist der Kennwert Φ grösser als 1, sind die Gewichtskräfte kleiner als die periodisch entgegen der Schwerkraftrichtung wirkenden Kräfte und es liegt der Betriebszustand des periodischen Abhebens oder des Springens vor.

Ist dabei der Kennwert Φ grösser als 1 aber kleiner als n-1 (2,1415), wird die Bodensteifigkeit $k_B$ gemäss oder unter Einbezug der folgenden Formel berechnet:

$$k_B = \frac{4\pi^2 f^2 (A_1 m_d + m_u r_u \cos\varphi)}{A_1 \left(1 + \cos\left\{\frac{\pi}{2}\left(\frac{\Phi-1}{1,14}\right)^{0,45}\right\}\right)}$$

Ist der Kennwert Φ hingegen grösser als n-1 (2,1415), wird die Bodensteifigkeit $k_B$ gemäss oder unter Einbezug der folgenden Formel berechnet:

$$k_B = \frac{4\pi^2 f^2 (A_1 m_d + m_u r_u \cos\varphi)}{A_1 \left(1 + \cos\left\{\frac{\pi}{2}\left(\frac{\Phi-1}{1,14}\right)^{0,36}\right\}\right)}$$

Die beiden letztgenannten Formeln berücksichtigen den beim periodischen Abheben zunehmenden Einfluss von tiefer liegenden Bodenschichten auf die Schwingungsantwort $x_d$ der Bandage 8 mit empirischen Faktoren (anspruchsgemässer Faktor K). Im vorliegenden Fall sind dies die Exponenten 0.45 bzw. 0.36 in den zuvor genannten Formeln.

Da es bei Verdichtungsmaschinen, welche den Betriebszustand des periodischen Abhebens bzw. des Springens zulassen, unter bestimmten Voraussetzungen zu chaotischen Schwingungszuständen kommen kann, bei denen die Schwingungsantwort keinerlei Periodizität mehr aufweist und eine Ermittlung der Bodensteifigkeit mit dem angegebenen Formelzusammenhang, welcher Linearität bzw. die Gültigkeit des Periodenverdoppelungsszenarios voraussetzt, nicht möglich ist, ist es hier optional vorgesehen, dass die Schwingungsantwort $x_d$ der Bandage 8 durch geeignetes Filtern bzw. FFT-Analyse daraufhin geprüft wird, ob Schwingungsanteile der Eigenfrequenz $f_0$ der über den Chassis-Rahmen 7 an den Walzenkörper 6 angekoppelten Struktur des übrigen Walzenzugs und/oder andere tieffrequente Schwingungsanteile, z.B. der Frequenz f/3, in substantiellem Masse in der Schwingungsantwort $x_d$ der Bandage 8 vorhanden sind. Die Eigenfrequenz $f_0$ der über den Chassis-Rahmen 7 an den Walzenkörper 6 angekoppelten Struktur des übrigen Walzenzugs kann durch Messungen ermittelt werden.

Werden derartige Schwingungsanteile festgestellt, erfolgt keine Berechnung der Bodensteifigkeit $k_B$ und es wird am Bedienpult angezeigt, dass ein unzulässiger Betriebszustand vorliegt, der zu beheben ist. In einer bevorzugten Ausführungsform wird der Walzenzug 1 beim Auftreten solcher Betriebzustände automatisch wieder in einen der drei zulässigen Betriebzustände Auflastbetrieb, periodischen Abheben oder Springen zurückgeregelt, da ein chaotischer Betriebszustand innert kurzer Zeit zu einer Beschädigung oder sogar zur Zerstörung des Walzenzugs führen kann.

Die Bodendämpfung $c_B$ kann gemäss oder unter Einbezug folgender Formel aus der jeweils ermittelten Bodensteifigkeit $k_B$ und den zuvor angegebenen Parametern ermittelt werden:

$$c_B = k_B \; \frac{1}{2\pi f} \; \tan\left\{ \arccos\left( \frac{(\Delta F_B)^2 + (m_d \, \Omega^2 A_1)^2 - (m_u \, r_u \, \Omega^2)^2}{2 \, m_d \cdot \Omega^2 A_1 \cdot \Delta F_B} \right) \right\}$$

Dabei werden die Parameter $\Delta F_B$ und $\Omega$ gemäss oder unter Einbezug der folgenden Formeln errechnet, wobei g die Erdbeschleunigung ist:

$$\Delta F_B = \Phi (m_f + m_d) g$$

$$\Omega = 2\pi f$$

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann. Insbesondere sei auch darauf hingewiesen, dass die hier anhand des erfindungsgemässen Walzenzugs dargelegten Verfahren zur Berechnung der Steifigkeiten und Dämpfungen auch auf andere erfindungsgemässe Maschinen übertragbar sind, beispielsweise auf erfindungsgemässe Vibrationsplatten oder Bohrmaschinen.

**Patentansprüche**

1.  Verfahren zur Ermittlung der Steifigkeit ($k_B$) und/oder Dämpfung ($c_B$) eines Bereichs einer Körperlichkeit (2), insbesondere zur Ermittlung der Bodensteifigkeit ($k_B$) und/oder Bodendämpfung ($c_B$) eines Bodenbereichs, umfassend die Schritte:

    a) Bereitstellen einer Einwirkanordnung (1) umfassend einen Kontaktkörper (6, 8) und einen Unwuchterreger, mit welchem der Kontaktkörper (6, 8) zu Schwingungen ($x_d$) anregbar ist;
    b) Einwirken auf eine Kontaktfläche (9) des Bereichs, dessen Steifigkeit ($k_B$) und/oder Dämpfung ($c_B$) ermittelt werden soll, mit dem Kontaktkörper (6, 8) in einer im Wesentlichen senkrecht zu der Kontaktfläche (9) verlaufenden Richtung, wobei der Kontaktkörper (6, 8) mit dem Unwuchterreger zu Schwingungen ($x_d$) angeregt wird, derartig, dass es infolge dieser Schwingungsanregung während dem Einwirken zu einem ungleichmässigen Kontaktverlust zwischen der Kontaktfläche (9) und dem Kontaktkörper (6, 8) kommt;
    c) Ermitteln von Parametern (f, $\ddot{x}_d$) der Schwingungsanregung des Unwuchterregers und der Schwingungsantwort des Kontaktkörpers (6, 8) während dem Einwirken auf die Kontaktfläche (9) unter ungleichmässigem Kontaktverlust; und
    d) Berechnen der Steifigkeit ($k_B$) und/oder Dämpfung ($c_B$) des Bereichs aus den beim Einwirken unter ungleichmässigen Kontaktverlust ermittelten Parametern (f, $\ddot{x}_d$) der Schwingungsanregung des Unwuchterregers und der Schwingungsantwort des Kontaktkörpers und aus bekannten Parametern ($m_u$, $r_u$, $m_d$) der Einwirkanordnung (1),

    wobei als Parameter (f, $\ddot{x}_d$) der Schwingungsanregung und der Schwingungsantwort ein Drehimpuls (f) des Unwuchterregers und der Verlauf der Beschleunigung ($\ddot{x}_d$) des Kontaktkörpers (6, 8) in Einwirkungsrichtung ermittelt werden und aus diesen Parametern (f, $\ddot{x}_d$) zusammen mit bekannten Parametern ($m_u$, $r_u$, $m_d$) des Systems Unwuchterreger-Kontaktkörper die Steifigkeit ($k_B$) und/- oder Dämpfung ($c_B$) berechnet wird, und wobei die Schwingüngsantwort ($x_d$) des Kontaktkörpers (6, 8) durch zweifache Integration der ermittelten Beschleunigung ($\ddot{x}_d$) des Kontaktkörpers (6, 8) in Einwirkungsrichtung ermittelt wird und der Anteil der Erregerfrequenz (f) an der Schwingungsantwort ($x_d$) des Kontaktkörpers (6, 8) ermittelt wird.

2. Verfahren nach Anspruch 1, **dadurch gekennzeichnet, dass** die Amplitude des Anteils der Erregerfrequenz (f) an der Schwingungsantwort ($x_d$) des Kontaktkörpers (6, 8) und der Nacheilwinkel ($\varphi$) des Anteils der Erregerfrequenz (f) an der Schwingungsantwort ($x_d$) des Kontaktkörpers (6, 8) gegenüber der Schwingungsanregung ermittelt werden und unter Kenntnis der Masse ($m_d$) des Kontaktkörpers (6, 8), der Masse ($m_u$) der Unwucht, des Schwerpunktsabstands ($r_u$) der Unwuchtmasse ($m_u$) vom Rotationszentrum sowie der Erregerfrequenz (f) die Bodensteifigkeit ($k_B$) gemäss oder unter Einbezug der folgenden Formel berechnet wird,

$$k_B = 4\pi^2 f^2 \left( m_d + \frac{m_u \, r_u \cos\varphi}{A_1} \right)$$

wobei f die Erregerfrequenz, $m_d$ die Masse des Kontaktkörpers (6, 8), $m_u$ die Masse der Unwucht, $r_u$ der Schwertpunktsabstand der Masse der Unwucht vom Rotationszentrum, $\varphi$ der Nacheilwinkel des Anteils der Erregerfrequenz (f) an der Schwingungsantwort ($x_d$) des Kontaktkörpers (6, 8) gegenüber der Schwingungsanregung und A1 die Amplitude des Anteils der Erregerfrequenz (f) an der Schwingungsantwort ($x_d$) des Kontaktkörpers (6, 8) ist.

3. Verfahren nach Anspruch 1, **dadurch gekennzeichnet, dass** aus ermittelten Parametern (f, $\ddot{x}_d$) der Schwingungsanregung des Unwuchterregers und/oder der Schwingungsantwort des Kontaktkörpers (6, 8) und aus bekannten Parametern ($m_u$, $r_u$, $m_d$, $m_f$) der Einwirkanordnung (1) das Verhältnis der entgegen der Schwerkraftrichtung wirkenden dynamischen Kräfte zu den in Schwerkraftrichtung wirkenden Gewichtskräften ermittelt wird und in Abhängigkeit von diesem Verhältnis verschiedene Formeln zur Berechnung der Steifigkeit ($k_B$) und/oder Dämpfung ($c_B$) verwendet werden.

4. Verfahren nach Anspruch 3, **dadurch gekennzeichnet, dass** die Amplitude des Anteils der Erregerfrequenz (f) an der Schwingungsantwort ($x_d$) des Kontaktkörpers (6, 8) und der Nacheilwinkel ($\varphi$) des Anteils der Erregerfrequenz (f) an der Schwingungsantwort ($x_d$) des Kontaktkörpers (6, 8) gegenüber der Schwingungsanregung ermittelt werden und unter Kenntnis der Masse ($m_d$) des Kontaktkörpers (6, 8), der Masse ($m_u$) der Unwucht, des Schwerpunktsabstands ($r_u$) der Unwuchtmasse ($m_u$) vom Rotationszentrum, der durch den Chassis-Rahmen (7) auf den Walzenkörper (6) wirkenden Masse ($m_f$) sowie der Erregerfrequenz (f) gemäss oder unter Einbezug der folgenden Formel ein Kennwert ($\Phi$) berechnet wird, welcher die entgegen der Schwerkraftrichtung wirkenden dynamischen Kräfte ins Verhältnis zu den in Schwerkraftrichtung wirkenden Gewichtskräften setzt,

$$\Phi = \frac{4\pi^2 f^2 m_u \, r_u \sqrt{\left(\frac{A_1}{A_0}\right)^2 + 1 + 2\left(\frac{A_1}{A_0}\right)\cos\varphi}}{(m_f + m_d)\, g}$$

wobei f die Erregerfrequenz, $m_u$ die Masse der Unwucht, $r_u$ der Schwerpunktsabstand der Masse der Unwucht vom Rotationszentrum, $\varphi$ der Nacheilwinkel des Anteils der Erregerfrequenz (f) an der Schwingungsantwort ($x_d$) des Kontaktkörpers (6, 8) gegenüber der Schwingungsanregung, A1 die Amplitude des Anteils der Erregerfrequenz (f) an der Schwingungsantwort ($x_d$) des Kontaktkörpers (6, 8), $m_f$ die durch den Chassis-Rahmen (7) auf den Walzenkörper (6) wirkende Masse und $m_d$ die Masse des Kontaktkörpers (6, 8) ist und sich $A_0$ gemäss oder unter Einbezug der folgenden Formel errechnet:

$$A_0 = \frac{m_u \, r_u}{m_d}$$

5. Verfahren nach Anspruch 4, **dadurch gekennzeichnet, dass** bei einer Grösse des Kennwert $\Phi$ von kleiner 1 eine andere Formel zur Berechnung der Steifigkeit ($k_B$) und/oder Dämpfung ($c_B$) verwendet wird als bei einer Grösse des Kennwert $\Phi$ von grösser 1, und insbesondere, dass die Steifigkeit ($k_B$) bei einer Grösse des Kennwerts $\Phi$ von kleiner 1 gemäss oder unter Einbezug folgender Formel berechnet wird

$$k_B = 4\pi^2 f^2 \left( m_d + \frac{m_u \, r_u \, \cos\varphi}{A_1} \right)$$

und bei einer Grösse des Kennwerts $\Phi$ von grösser 1 gemäss oder unter Einbezug folgender Formel berechnet wird:

$$k_B = \frac{4\pi^2 f^2 (A_1 m_d + m_u r_u \cos\varphi)}{A_1 \left( 1 + \cos\left\{ \frac{\pi}{2} \left( \frac{\Phi - 1}{1,14} \right)^K \right\} \right)}$$

wobei f die Erregerfrequenz, $m_u$ die Masse der Unwucht, $r_u$ der Schwerpunktsabstand der Masse der Unwucht vom Rotationszentrum, $\varphi$ der Nacheilwinkel des Anteils der Erregerfrequenz (f) an der Schwingungsantwort ($x_d$) des Kontaktkörpers (6, 8) gegenüber der Schwingungsanregung, A1 die Amplitude des Anteils der Erregerfrequenz (f) an der Schwingungsantwort ($x_d$) des Kontaktkörpers (6, 8), $m_d$ die Masse des Kontaktkörpers (6, 8) und K ein empirischer Faktor zwischen 0.3 und 0.5 ist.

6. Verfahren nach Anspruch 5, **dadurch gekennzeichnet, dass** bei unterschiedlichen Grössen des Kennwerts $\Phi$ unterschiedliche empirische Faktoren K verwendet werden, insbesondere bei einer Grösse des Kennwerts $\Phi$ zwischen 1 und 2 ein erster empirischer Faktor K verwendet wird und bei einer Grösse des Kennwerts $\Phi$ grösser 2.5 ein anderer empirischer Faktor K als der erste empirische Faktor K verwendet wird.

7. Verfahren nach Anspruch 1, **dadurch gekennzeichnet, dass** neben dem Anteil der Erregerfrequenz (f) an der Schwingungsantwort ($x_d$) des Kontaktkörpers (6, 8) zusätzlich etwaige vorhandene Anteile anderer tieffrequenter Frequenzen an der Schwingungsantwort ($x_d$) des Kontaktkörpers (6, 8) ermittelt werden und bei Ermittlung solcher Anteile in Abhängigkeit vom Ermittlungsergebnis Einfluss auf die Berechnung der Steifigkeit ($k_B$) und/oder Dämpfung ($c_B$) genommen wird.

8. Verfahren nach Anspruch 7, **dadurch gekennzeichnet, dass** ein etwaiger Anteil der Eigenfrequenz einer schwingfähig in Einwirkrichtung mit dem Kontaktkörper (6, 8) verbundenen Masse ($m_f$) und/oder ein etwaiger Anteil einer im Sinne der Periodenverdoppelung nicht subharmonischen Frequenz kleiner der Erregungsfrequenz (f) ermittelt wird und bei Ermittlung eines solchen Anteils ein Regeleingriff auf den Unwuchterreger erfolgt und/oder keine Berechnung der Steifigkeit ($k_B$) und/oder Dämpfung ($c_B$) erfolgt.

9. Verfahren nach einem der vorangehenden Ansprüche, **dadurch gekennzeichnet, dass** die Parameter (f, $\ddot{x}_d$) fortlaufend ermittelt werden und fortlaufend aus diesen die Steifigkeit ($k_B$) und/oder Dämpfung ($c_B$) berechnet wird.

10. Verfahren nach einem der vorangehenden Ansprüche, **dadurch gekennzeichnet, dass** die ermittelte Steifigkeit ($k_B$) und/oder Dämpfung ($c_B$) insbesondere visuell wahrnehmbar gemacht wird, insbesondere als Zahlenwert oder als grössenvariabler Balken dargestellt wird.

11. Verfahren nach einem der vorangehenden Ansprüche, **dadurch gekennzeichnet, dass** mit der Bodenplatte einer Vibrationsplatte oder dem Walzenkörper (6, 8) einer Vibrationswalze (1) als Kontaktkörper (6, 8) auf die Oberfläche (9) eines insbesondere verdichteten und/- oder zu verdichtenden Bereichs eines Bodens (2) eingewirkt wird und die Bodensteifigkeit ($k_B$) und/oder Dämpfung ($c_B$) des Bodenbereichs berechnet wird.

12. Verfahren nach Anspruch 4, **dadurch gekennzeichnet, dass** die Bodenplatte der Vibrationsplatte oder der Walzenkörper (6, 8) der Vibrationswalze (1) während dem Einwirken über die Oberfläche (9) des Bodenbereichs bewegt wird.

13. Verfahren nach einem der Ansprüche 11 bis 12, **dadurch gekennzeichnet, dass** der Bodenbereich beim Einwirken auf seine Oberfläche (9) mit der Bodenplatte der Vibrationsplatte oder mit dem Walzenkörper (6, 8) der Vibrationswalze (1) verdichtet wird.

14. Verfahren nach einem der vorangehenden Ansprüche, **dadurch gekennzeichnet, dass** das Einwirken auf die Kontaktfläche (9) im Wesentlichen in Schwerkraftrichtung erfolgt.

15. Verfahren nach einem der vorangehenden Ansprüche, **dadurch gekennzeichnet, dass** als Kontaktkörper (6, 8) ein Werkzeug (6, 8) verwendet wird, mit welchem der Bereich, dessen Steifigkeit ($k_B$) und/oder Dämpfung ($c_B$) ermittelt werden soll, während dem Einwirken bearbeitet, insbesondere verdichtet wird.

16. Verfahren nach einem der vorangehenden Ansprüche, **dadurch gekennzeichnet, dass** die Schwingungsanregung durch den Unwuchterreger beim Ermitteln der Parameter (f, $\ddot{x}_d$) im Wesentlichen konstant ist.

17. Verfahren nach einem der vorangehenden Ansprüche, **dadurch gekennzeichnet, dass** das Einwirken auf die Kontaktfläche (9) mit dem Kontaktkörper (6, 8) zeitweise derartig erfolgt, dass es infolge der Schwingungsanregung des Unwuchterregers während dem Einwirken zu einem gleichmässigen Kontaktverlust und/oder zu keinem Kontaktverlust zwischen der Kontaktfläche (9) und dem Kontaktkörper (6, 8) kommt.

18. Vorrichtung (1) zur Ermittlung der Steifigkeit ($k_B$) und/oder Dämpfung ($c_B$) eines Bereichs einer Körperlichkeit (2), insbesondere zur Ermittlung der Bodensteifigkeit ($k_B$) und/oder Dämpfung ($c_B$) eines Bodenbereichs, nach dem Verfahren nach einem der vorangehenden Ansprüche, umfassend:

a) einen Kontaktkörper (6, 8) zum Einwirken auf eine Kontaktfläche (9) des Bereichs, dessen Steifigkeit ($k_B$) und/oder Dämpfung ($c_B$) ermittelt werden soll, in einer im Wesentlichen senkrecht zur Kontaktfläche (9) verlaufenden Richtung,
b) einen insbesondere ungeregelten Unwuchterreger, mit welchem der Kontaktkörper (6, 8) derartig zu Schwingungen ($x_d$) angeregt werden kann, dass es beim bestimmungsgemässen Einwirken auf die Kontaktfläche (9) infolge dieser Schwingungsanregung zu einem ungleichmässigen Kontaktverlust zwischen der Kontaktfläche (9) und dem Kontaktkörper (6, 8) kommt oder kommen kann,
c) Messmittel zur insbesondere fortlaufenden Ermittlung von Parametern (f, $\ddot{x}_d$) der Schwingungsanregung des Unwuchterregers und der Schwingungsantwort ($x_d$) des Kontaktkörpers (6, 8) während einem Einwirken auf die Kontaktfläche (9) unter ungleichmässigem Kontaktverlust zwischen der Kontaktfläche (9) und dem Kontaktkörper (6, 8), und

d) Auswertemittel zum insbesondere fortlaufenden Berechnen der Steifigkeit ($k_B$) und/oder Dämpfung ($c_B$) des Bereichs mit den während dem Einwirken auf die Kontaktfläche (9) unter ungleichmässigem Kontaktverlust zwischen der Kontaktfläche (9) und dem Kontaktkörper (6, 8) ermittelten Parametern (f, $\ddot{x}_d$).

**19.** Vorrichtung (1) nach Anspruch 18, **dadurch gekennzeichnet, dass** die Messmittel und die Auswertemittel derart ausgestaltet sind, dass sie zusätzlich geeignet sind zur Ermittlung der Parameter (f, $\ddot{x}_d$) und zum Berechnen der Steifigkeit ($k_B$) und/oder Dämpfung ($c_B$) während einem Einwirken auf die Kontaktfläche (9) unter einem gleichmässigen Kontaktverlust und/oder unter keinem Kontaktverlust zwischen der Kontaktfläche (9) und dem Kontaktkörper (6, 8).

**20.** Vorrichtung (1) nach einem der Ansprüche 18 bis 19, **dadurch gekennzeichnet, dass** die Vorrichtung (1) Mittel aufweist zur visuellen Wahrnehmbarmachung der ermittelten Steifigkeit ($k_B$) und/oder Dämpfung ($c_B$), insbesondere ein Display zur Anzeige eines eine Steifigkeit ($k_B$) und/oder Dämpfung ($c_B$) repräsentierenden Zahlenwerts oder eines Balkens, dessen Länge die Steifigkeit ($k_B$) und/oder Dämpfung ($c_B$) repräsentiert.

**21.** Vorrichtung (1) nach einem der Ansprüche 18 bis 20, **dadurch gekennzeichnet, dass** der Kontaktkörper (6, 8) von einem Werkzeug (6, 8) zur Bearbeitung des Bereichs der Körperlichkeit (2) gebildet ist.

**22.** Vorrichtung (1) nach Anspruch 21, **dadurch gekennzeichnet, dass** die Vorrichtung (1) eine Vibrationsplatte oder eine Vibrationswalze (1) ist, wobei der Kontaktkörper (6, 8) durch die Bodenplatte der Vibrationsplatte bzw. durch den Walzenkörper (6, 8) der Vibrationswalze (1) gebildet ist.

**23.** Vorrichtung (1) nach einem der Ansprüche 18 bis 22, **dadurch gekennzeichnet, dass** der Unwuchterreger ein Kreisschwinger oder ein Richtschwinger ist, insbesondere ein Richtschwinger mit einer verstellbaren Erregungskraftrichtung.

## Claims

**1.** Method for determining the stiffness ($k_B$) and/or damping ($c_B$) of an area of a physicalness (2), in particular for determining the soil stiffness ($k_B$) and/or the soil damping ($c_B$) of a soil area, comprising the steps:

> a) providing an acting upon arrangement (1) comprising a contact body (6, 8) and an unbalance type vibrator, by means of which the contact body (6, 8) can be excited in order to perform oscillations ($x_d$);
> b) acting upon a contact surface (9) of the area, the stiffness ($k_B$) and/or the damping ($c_B$) of which shall be determined, by means of the contact body (6, 8) in a direction which runs substantially perpendicular to the contact surface (9), wherein the contact body (6, 8) by the unbalance type vibrator is excited to perform oscillations ($x_d$), such that due to this oscillation excitation during the acting upon the contact surface an unsteady contact loss between the contact surface (9) and the contact body (6, 8) occurs;
> c) determining of parameters (f, $\ddot{x}_d$) of the oscillation excitation of the unbalance type vibrator and of the oscillation response of the contact body (6, 8) during the acting upon the contact surface (9) while an unsteady contact loss occurs; and
> d) computing the stiffness ($k_B$) and/or the damping ($c_B$) of the area from the parameters (f, $\ddot{x}_d$) of the oscillation excitation of the unbalance type vibrator and of the oscillation response of the contact body which have been determined during the acting upon the contact surface while an unsteady contact loss occurred and from known parameters ($m_u$, $r_u$, $m_d$) of the acting upon arrangement (1),
> wherein as parameters (f, $\ddot{x}_d$) of the oscillation excitation and of the oscillation response a rotational pulse (f) of the unbalance type vibrator and the course of the acceleration ($\ddot{x}_d$) of the contact body (6, 8) in the direction of acting upon the contact surface are determined and from these parameters (f, $\ddot{x}_d$) together with known parameters ($m_u$, $r_u$, $m_d$) of the system unbalance type vibrator - contact body, the stiffness ($k_B$) and/or the damping ($c_B$) is computed,
> and wherein the oscillation response ($x_d$) of the contact body (6, 8) is determined by two times integrating the determined acceleration ($\ddot{x}_d$) of the contact body (6, 8) in the direction of acting upon the contact surface and the portion of the excitation frequency (f) of the oscillation response ($x_d$) of the contact body (6, 8) is determined.

**2.** Method according to claim 1, **characterized in that** the amplitude of the portion of the excitation frequency (f) of the oscillation response ($x_d$) of the contact body (6, 8) and the phase lag ($\varphi$) of the portion of the excitation frequency (f) of the oscillation response ($x_d$) of the contact body (6, 8) with respect to the oscillation excitation are determined and with the knowledge of the mass ($m_d$) of the contact body (6, 8), of the mass ($m_u$) of the unbalance, of the distance ($r_u$) of the mass center of the unbalance mass ($m_u$) from the center of rotation as well as of the excitation frequency (f), the soil stiffness ($k_B$) is computed according to or with involvement of the following formula:

$$k_B = 4\pi^2 f^2 \left( m_d + \frac{m_u \, r_u \, \cos\varphi}{A_1} \right)$$

wherein f is the excitation frequency, $m_d$ is the mass of the contact body (6, 8), $m_u$ is the mass of the unbalance, $r_u$ is the distance of the mass center of the unbalance mass ($m_u$) from the center of rotation, $\varphi$ is the phase lag of the portion of the excitation frequency (f) of the oscillation response ($x_d$) of the contact body (6, 8) with respect to the oscillation excitation and A1 is the amplitude of the portion of the excitation frequency (f) of the oscillation response ($x_d$) of the contact body (6, 8).

3. Method according to claim 1, **characterized in that** from the determined parameters (f, $\ddot{x}_d$) of the oscillation excitation of the unbalance type vibrator and/- or the oscillation response of the contact body (6, 8) and from known parameters ($m_u$, $r_u$, $m_d$, $m_f$) of the acting upon arrangement (1), the ratio of the dynamic forces acting in opposite direction than the gravity forces to the weight forces acting in direction of the gravity forces is determined and in dependency of this ratio different formulas are applied for the computation of the stiffness ($k_B$) and/or the damping ($c_B$).

4. Method according to claim 3, **characterized in that** the amplitude of the portion of the excitation frequency (f) of the oscillation response ($x_d$) of the contact body (6, 8) and the phase lag of the portion of the excitation frequency (f) of the oscillation response ($x_d$) of the contact body (6, 8) with respect to the oscillation excitation are determined and, with the knowledge of the mass ($m_d$) of the contact body (6, 8), of the mass ($m_u$) of the unbalance, of the distance ($r_u$) of the mass center of the unbalance mass ($m_u$) from the center of rotation, of the mass ($m_f$) acting upon the roller body (6) through the chassis frame (7) as well as of the excitation frequency (f), a characteristic value ($\Phi$) is computed according to or with involvement of the following formula, which characteristic value puts into relation the dynamic forces acting in opposite direction than the gravity forces to the weight forces acting in direction of the gravity forces,

$$\Phi = \frac{4\pi^2 f^2 m_u \, r_u \sqrt{\left(\frac{A_1}{A_0}\right)^2 + 1 + 2\left(\frac{A_1}{A_0}\right)\cos\varphi}}{(m_f + m_d)\, g}$$

wherein f is the excitation frequency, $m_u$ is the mass of the unbalance, $r_u$ is the distance of the mass center of the unbalance mass from the center of rotation, $\varphi$ is the phase lag of the portion of the excitation frequency (f) of the oscillation response ($x_d$) of the contact body (6, 8) with respect to the oscillation excitation, A1 is the amplitude of the portion of the excitation frequency (f) of the oscillation response ($x_d$) of the contact body (6, 8), $m_f$ is the mass acting upon the roller body (6) through the chassis frame (7) and $m_d$ is the mass of the contact body (6, 8) and $A_0$ is computed according to or with involvement of the following formula:

$$A_0 = \frac{m_u \, r_u}{m_d}$$

5. Method according to claim 4, **characterized in that** when the characteristic value $\Phi$ is less than 1, a different formula is applied for computation of the stiffness ($k_B$) and/or the damping ($c_B$) as when the characteristic value $\Phi$ is greater than 1, and in particular that when the characteristic value $\Phi$ is less than 1, the stiffness ($k_B$) is computed according to or with involvement of the following formula:

$$k_B = 4\pi^2 f^2 \left( m_d + \frac{m_u \, r_u \, \cos\varphi}{A_1} \right)$$

and when the characteristic value $\Phi$ is greater than 1, is computed according to or with involvement of the following formula:

$$k_B = \frac{4\pi^2 f^2 (A_1 m_d + m_u r_u \cos\varphi)}{A_1 \left( 1 + \cos\left\{ \frac{\pi}{2} \left( \frac{\Phi - 1}{1,14} \right)^K \right\} \right)}$$

wherein f is the excitation frequency, $m_u$ is the mass of the unbalance, $r_u$ is the distance of the mass center of the unbalance mass from the center of rotation, $\Phi$ is the phase lag of the portion of the excitation frequency (f) of the oscillation response ($x_d$) of the contact body (6, 8) with respect to the oscillation excitation, A1 is the amplitude of the portion of the excitation frequency (f) of the oscillation response ($x_d$) of the contact body (6, 8), $m_d$ is the mass of the contact body (6, 8) and K is an empirical factor between 0.3 and 0.5.

6. Method according to claim 5, **characterized in that** for different characteristic values $\Phi$ different empirical factors K are applied, in particular when the characteristic value $\Phi$ is between 1 and 2, a first empirical factor K is applied and when the characteristic value $\Phi$ is greater than 2.5, another empirical factor K than the first empirical factor K is applied.

7. Method according to claim 1, **characterized in that** beside the portion of the excitation frequency (f) of the oscillation response ($x_d$) of the contact body (6, 8), in addition a determination for possibly present portions of other low frequencies of the excitation frequency (f) of the oscillation response ($x_d$) is performed and if such portions are determined, in dependency of the result of the determination the computation of the stiffness ($k_B$) and/or the damping ($c_B$) is influenced.

8. Method according to claim 7, **characterized in that** a determination for a possibly present portion of the natural frequency of a mass ($m_f$) that is coupled to the contact body (6) in a manner that it can oscillate in acting upon direction and/or for a possibly present portion of a frequency which in the sense of period duplication is not subharmonic and is lower than the excitation frequency (f) is performed and if such a portion is determined, a control intervention with respect to the unbalance type vibrator is performed and/or no computation of the stiffness ($k_B$) and/or damping ($c_B$) is performed.

9. Method according to one of the preceding claims, **characterized in that** the parameters (f, $\ddot{x}_d$) are continuously determined und continuously the stiffness ($k_B$) and/or damping ($c_B$) is computed therefrom.

10. Method according to one of the preceding claims, **characterized in that** the determined stiffness ($k_B$) and/or damping ($c_B$) is made noticeable, in particular made visually noticeable, in particular is displayed as numerical value or as bar of variable size.

11. Method according to one of the preceding claims, **characterized in that** by means of the bottom plate of a vibratory plate compactor or the roller body (6, 8) of a vibratory roller (1) as contact body (6, 8) it is acted upon the surface (9) of a soil (2) which in particular is compacted and/or shall be compacted, and that the soil stiffness ($k_B$) and/or damping ($c_B$) of the soil area is computed.

12. Method according to claim 4, **characterized in that** the bottom plate of the vibratory plate compactor or the roller body (6, 8) of the vibratory roller (1) during the acting upon is moved along the surface (9) of the soil area.

13. Method according to one of the claims 11 to 12, **characterized in that** the soil area is compacted when by means of the bottom plate of the vibratory plate compactor or by means of the roller body (6, 8) of the vibratory roller (1) it is acted upon its surface (9).

14. Method according to one of the preceding claims, **characterized in that** the acting upon the contact surface (9) substantially takes place in direction of gravity forces.

15. Method according to one of the preceding claims, **characterized in that** as contact body (6, 8) a tool (6, 8) is employed, by means of which the area, of which the stiffness ($k_B$) and/or damping ($c_B$) shall be determined, during the acting upon the contact surface is treated, in particular is compacted.

16. Method according to one of the preceding claims, **characterized in that** the oscillation excitation of the unbalance type vibrator during the determination of the parameters (f, $\ddot{x}_d$) is kept substantially constant.

17. Method according to one of the preceding claims, **characterized in that** the acting upon the contact surface (9) by means of the contact body (6, 8) temporarily takes place in such a manner that due to the oscillation excitation of the unbalance type vibrator during the acting upon the contact surface a steady contact loss and/or no contact loss between the contact surface (9) and the contact body (6, 8) occurs.

18. Apparatus (1) for the determination of the stiffness ($k_B$) and/or damping ($c_B$) of an area of a physicalness (2), in particular for the determination of the soil stiffness ($k_B$) and/or damping ($c_B$) of a soil area, in accordance to the method according to one of the preceding claims, comprising:

   a) a contact body (6, 8) for acting upon a contact surface (9) of the area, the stiffness ($k_B$) and/or damping ($c_B$) of which shall be determined in a direction substantially perpendicular to the contact surface (9),
   b) an in particular unregulated unbalance type vibrator, by means of which the contact body (6, 8) can be excited to perform oscillations ($x_d$) in such a manner that during the intended acting upon the contact surface (9) due to this oscillation excitation it comes or it can come to an unsteady contact loss between the contact surface (9) and the contact body (6, 8),
   c) measuring means for a in particular continuous determination of parameters (f, $\ddot{x}_d$) of the oscillation excitation of the unbalance type vibrator and of the oscillation response ($x_d$) of the contact body (6, 8) during an acting upon the contact surface (9) while an unsteady contact loss between the contact surface (9) and the contact body (6, 8) occurs, and
   d) computing means for a in particular continuous computation of the stiffness ($k_B$) and/or damping ($c_B$) of the area from the parameters (f, $\ddot{x}_d$) which have been determined during the acting upon the contact surface (9) while an unsteady contact loss occurred between the contact surface (9) and the contact body (6, 8).

**19.** Apparatus (1) according to claim 18, **characterized in that** the measuring means and the computing means are designed in such a manner that in addition they are suitable for a determination of the parameters (f, $\ddot{x}_d$) and for a computation of the stiffness ($k_B$) and/or damping ($c_B$) during an acting upon the contact surface (9) while a steady contact loss and/or no contact loss between the contact surface (9) and the contact body (6, 8) occurs.

**20.** Apparatus (1) according to one of the claims 18 to 19, **characterized in that** the apparatus (1) comprises means for making the determined stiffness ($k_B$) and/or damping ($c_B$) visually noticeable, in particular comprises a display for displaying a numeric value representing the stiffness ($k_B$) and/or damping ($c_B$) or a bar, the lengths of which represents the stiffness ($k_B$) and/or damping ($c_B$).

**21.** Apparatus (1) according to one of the claims 18 to 20, **characterized in that** the contact body (6, 8) is formed by a tool (6, 8) for treating the area of the physicalness (2).

**22.** Apparatus (1) according to claim 21, **characterized in that** the apparatus (1) is a vibratory plate compactor or a vibratory roller (1), wherein the contact body (6, 8) is formed by the bottom plate of the vibratory plate compactor or by the roller body (6, 8) of the vibratory roller (1), respectively.

**23.** Apparatus (1) according to one of the claims 18 to 22, **characterized in that** the unbalance type vibrator is a circular vibrator or is a directional vibrator, in particular a directional vibrator with adjustable exciting force direction.

**Revendications**

**1.** Procédé pour déterminer la rigidité ($k_B$) et/ou l'amortissement ($c_B$) d'une région d'un corps (2), particulièrement pour déterminer la rigidité de sol ($k_B$) et/ou l'amortissement de sol ($c_B$) d'une région de sol, comprenant les étapes:

a) de prévoir un arrangement d'action (1) comprenant un corps de contact (6, 8) et un excitateur à balourd à l'aide duquel le corps de contact (6, 8) est excité aux oscillations ($x_d$);
b) d'agir sur une surface de contact (9) de la région, la rigidité ($k_B$) et/ou l'amortissement ($c_B$) de laquelle doit être déterminé, avec le corps de contact (6, 8) dans une direction essentiellement perpendiculaire sur la surface de contact (9), le corps de contact (6, 8) étant excité aux oscillations ($x_d$) avec l'excitateur à balourd, de manière à générer une perte irrégulière de contact entre la surface de contact (9) et le corps de contact (6, 8) pendant l'action, à cause de l'excitation aux oscillations;
c) de déterminer des paramètres (f, $\ddot{x}_d$) de la stimulation aux oscillations de l'excitateur à balourd et de la réponse aux oscillations du corps de contact (6, 8) pendant l'action sur la surface de contact (9) en présence de la perte irrégulière de contact; et
d) de calculer la rigidité ($k_B$) et/ou l'amortissement ($c_B$) de la région à partir des paramètres (f, $\ddot{x}_d$) de l'excitation aux oscillations de l'excitateur à balourd en présence de la perte irrégulière de contact et de la réponse aux oscillations du corps de contact pendant l'action et à partir des paramètres connus ($m_u$, $r_u$, $m_d$) de l'arrangement d'action (1),
un moment cinétique (f) de l'excitateur à balourd et le cours de l'accélération ($\ddot{x}_d$) du corps de contact (6, 8) dans la direction d'action étant déterminés comme paramètres (f, $\ddot{x}_d$) de l'excitation aux oscillations et de la réponse aux oscillations, et la rigidité ($k_B$) et/ou l'amortissement ($c_B$) étant calculé à partir de ces paramètres (f, $\ddot{x}_d$) ensemble avec des paramètres connus ($m_u$, $r_u$, $m_d$) du système excitateur à balourd/corps de contact, et la réponse aux oscillations ($x_d$) du corps de contact étant déterminée par double intégration de l'accélération déterminée ($\ddot{x}_d$) du corps de contact (6, 8) dans la direction d'action et la fraction de la fréquence d'excitation (f) dans la réponse aux oscillations ($x_d$) du corps de contact étant déterminée.

**2.** Procédé selon la revendication 1, **caractérisé en ce que** l'amplitude de la fraction de la fréquence d'excitation (f) dans la réponse aux oscillations ($x_d$) du corps de contact (6, 8) et l'angle de retard ($\varphi$) de la fraction de la fréquence d'excitation (f) dans la réponse aux oscillations ($x_d$) du corps de contact (6, 8) sont déterminés par rapport à l'excitation aux oscillations et la rigidité du sol ($k_B$) est calculée, en connaissant la masse ($m_d$) du corps de contact (6, 8), la masse ($m_u$) du balourd, la distance du centre de gravité ($r_u$) de la masse du balourd ($m_u$) du centre de rotation et la fréquence d'excitation (f), en utilisant la formule suivante:

$$k_B = 4\pi^2 f^2 \left( m_d + \frac{m_u r_u \cos\varphi}{A_1} \right)$$

f étant la fréquence d'excitation, $m_d$ la masse du corps de contact (6, 8), $m_u$ la masse du balourd, $r_u$ la distance du centre de gravité de la masse du balourd du centre de rotation, $\varphi$ l'angle de retard de la fraction de la fréquence d'excitation (f) dans la réponse aux oscillations ($x_d$) du corps de contact (6, 8) par rapport à l'excitation aux oscillations et $A_1$ l'amplitude de la fraction de la fréquence d'excitation (f) dans la réponse aux oscillations ($x_d$) du corps de contact (6, 8).

3. Procédé selon la revendication 1, **caractérisé en ce que** le rapport entre des forces dynamiques agissant dans la direction contraire à la direction de la force gravitationnelle et les forces gravitationnelles agissant dans la direction gravitationnelle est déterminé à l'aide des paramètres (f, $\ddot{x}_d$) déterminés à partir de l'excitation aux oscillations de l'excitateur à balourd et/ou de la réponse aux oscillations du corps de contact (6, 8) et des paramètres connus ($m_u$, $r_u$, $m_d$, $m_f$) de l'arrangement d'action (1), et, des différentes formules pour le calcul de la rigidité ($k_B$) et/ou l'amortissement ($c_B$) sont utilisées en dépendance de ce rapport.

4. Procédé selon la revendication 3, **caractérisé en ce que** l'amplitude de la fraction de la fréquence d'excitation (f) dans la réponse aux oscillations ($x_d$) du corps de contact (6, 8) et l'angle de retard ($\varphi$) de la fraction de la fréquence d'excitation (f) dans la réponse aux oscillations ($x_d$) du corps de contact (6, 8) sont déterminés par rapport à l'excitation aux oscillations et une valeur caractéristique ($\Phi$) est calculée, en connaissant la masse ($m_d$) du corps de contact (6, 8), la masse ($m_u$) du balourd, la distance du centre de gravité ($r_u$) de la masse du balourd ($m_u$) du centre de rotation, la masse agissant sur le corps du rouleau (6) par le cadre du châssis (7) et la fréquence d'excitation (f), selon ou à l'aide de la formule suivante, la valeur caractéristique établissant le rapport entre des forces dynamiques agissant dans la direction contraire à la direction de la force gravitationnelle et les forces gravitationnelles agissant dans la direction gravitationnelle,

$$\phi = \frac{4\pi^2 f^2 m_u r_u \sqrt{\left(\frac{A_1}{A_0}\right)^2 + 1 + 2\left(\frac{A_1}{A_0}\right)\cos\varphi}}{(m_f + m_d)g}$$

f étant la fréquence d'excitation, $m_u$ la masse du balourd, $r_u$ la distance du centre de gravité de la masse du balourd du centre de rotation, $\varphi$ l'angle de retard de la fraction de la fréquence d'excitation (f) dans la réponse aux oscillations ($x_d$) du corps de contact (6, 8) par rapport l'excitation aux oscillations, $A_1$ l'amplitude de la fraction de la fréquence d'excitation (f) dans la réponse aux oscillations ($x_d$) du corps de contact (6, 8), $m_f$ la masse agissant sur le corps du rouleau (6) par le cadre du châssis (7) et $m_d$ la masse du corps de contact (6, 8) et $A_0$ étant calculé selon ou à l'aide de la formule suivante:

$$A_0 = \frac{m_u r_u}{m_d}$$

5. Procédé selon la revendication 4, **caractérisé en ce qu'**une autre formule est utilisée pour calculer la rigidité ($k_B$) et/ou l'amortissement ($c_B$) quand la valeur caractéristique $\Phi$ est supérieure à 1 que dans le cas où la valeur caractéristique est inférieure à 1, et particulièrement **en ce que** la rigidité ($k_B$) est calculée selon ou à l'aide de la formule suivante quand la valeur caractéristique est inférieure à 1

$$k_B = 4\pi^2 f^2 \left( m_d + \frac{m_u r_u \cos\varphi}{A_1} \right)$$

et quand la valeur caractéristique est supérieure à 1 selon ou à l'aide de la formule suivante:

$$k_B = \frac{4\pi^2 f^2 (A_1 m_d + m_u r_u \cos\varphi)}{A_1 \left( 1 + \cos\left\{ \frac{\pi}{2} \left( \frac{\Phi - 1}{1.14} \right)^K \right\} \right)}$$

f étant la fréquence d'excitation, $m_u$ la masse du balourd, $r_u$ la distance du centre de gravité de la masse du balourd du centre de rotation, $\varphi$ l'angle de retard de la fraction de la fréquence d'excitation (f) dans la réponse aux oscillations ($x_d$) du corps de contact (6, 8) par rapport l'excitation aux oscillations, $A_1$ l'amplitude de la fraction de la fréquence d'excitation (f) dans la réponse aux oscillations ($x_d$) du corps de contact (6, 8), $m_d$ la masse du corps de contact (6, 8) et K un facteur empirique compris entre 0.3 et 0.5.

6. Procédé selon la revendication 5, **caractérisé en ce que** des différents facteurs empiriques K sont utilisés pour des différentes valeurs caractéristiques 0, particulièrement un premier facteur empirique K étant utilisé en cas d'une valeur caractéristique $\Phi$ comprise entre 1 est 2 et un autre facteur empirique K que le premier facteur empirique K étant utilisé quand la valeur caractéristique est supérieure à 2.5.

7. Procédé selon la revendication 1, **caractérisé en ce que**, outre la fraction de la fréquence d'excitation (f) dans la réponse aux oscillations ($x_d$) du corps de contact (6, 8), des éventuellement présentes fractions d'autres basses fréquences dans la réponse aux oscillations ($x_d$) du corps de contact (6, 8) sont additionnellement déterminées, et le calcul de la rigidité ($k_B$) et/ou l'amortissement ($c_B$) est adapté dépendant du résultat quand des telles fractions sont déterminées.

8. Procédé selon la revendication 7, **caractérisé en ce qu'**une éventuelle fraction de la fréquence propre d'une masse ($m_f$) connectée avec le corps de contact (6, 8) de manière à pouvoir osciller dans la direction d'action et/ou une éventuelle fraction d'une fréquence inférieure à la fréquence d'excitation (f) et sous-harmonique dans le sens du doublement de période est déterminée et une intervention de régulation est effectuée sur l'excitateur à balourd pendant la détermination d'une telle fraction et/ou aucun calcul de la rigidité ($k_B$) et/ou l'amortissement ($c_B$) est effectué.

9. Procédé selon l'une des revendications précédentes, **caractérisé en ce que** les paramètres (f, $\ddot{x}_d$) sont déterminés continument et la rigidité ($k_B$) et/ou l'amortissement ($c_B$) est calculé continument à la base desdits paramètres.

10. Procédé selon l'une des revendications précédentes, **caractérisé en ce que** la rigidité ($k_B$) et/ou l'amortissement ($c_B$) est particulièrement visualisé, particulièrement comme valeur numérique ou comme barre variable en valeur.

11. Procédé selon l'une des revendications précédentes, **caractérisé en ce qu'**une plaque de base d'une plaque vibrante ou le corps de rouleau (6, 8) d'un rouleau vibrant (1) agit comme corps de contact sur la surface (9) d'une région d'un sol particulièrement compacté ou à compacter et que la rigidité de sol ($k_B$) et/ou l'amortissement ($c_B$) de la région de sol est calculé.

12. Procédé selon la revendication 4, **caractérisé en ce que** la plaque de base de la plaque de vibration ou le corps de rouleau (6, 8) du rouleau vibrant (1) est déplacée au-dessus de la surface (9) de la région de sol pendant l'action.

13. Procédé selon l'une des revendications 11 à 12, **caractérisé en ce que** la région de sol est compactée avec la plaque de base de la plaque de vibration ou avec le corps de rouleau (6, 8) du rouleau vibrant (1) pendant l'action sur sa surface (9).

**14.** Procédé selon l'une des revendications précédentes, **caractérisé en ce que** l'action sur la surface de contact (9) est effectuée essentiellement dans la direction de la force de gravité.

**15.** Procédé selon l'une des revendications précédentes, **caractérisé en ce qu'**un outil (6, 8) est utilisé comme corps de contact (6, 8), à l'aide duquel la région, sa rigidité ($k_B$) et/ou son amortissement ($c_B$) doit être déterminé, est travaillée, particulièrement compactée, pendant l'action.

**16.** Procédé selon l'une des revendications précédentes, **caractérisé en ce que** l'excitation aux oscillations est essentiellement constante pendant la détermination des paramètres (f, $\ddot{x}_d$) à l'aide de l'excitateur à balourd.

**17.** Procédé selon l'une des revendications précédentes, **caractérisé en ce que** l'action sur la surface de contact (9) avec le corps de contact (6, 8) est effectuée par instants de manière à générer une perte de contact régulière et/ou aucune perte de contact entre la surface de contact (9) et le corps de contact (6, 8) à cause de l'excitation aux oscillations de l'excitateur à balourd pendant l'action.

**18.** Dispositif (1) pour déterminer la rigidité ($k_B$) et/ou l'amortissement ($c_B$) d'une région d'un corps (2), particulièrement pour déterminer la rigidité ($k_B$) et/ou l'amortissement ($c_B$) d'une région de sol, selon le procédé selon l'une des revendications précédentes, comprenant:

a) un corps de contact (6, 8) pour agir sur une surface de contact (9) de la région, la rigidité ($k_B$) et/ou l'amortissement ($c_B$) de laquelle doit être déterminé, dans une direction essentiellement perpendiculaire sur la surface de contact (9),
b) un excitateur à balourd particulièrement non-réglé, à l'aide duquel le corps de contact (6, 8) peut être excité en oscillations ($x_d$) de manière à générer une perte de contact irrégulière entre la surface de contact (9) et le corps de contact (6, 8) à cause de l'excitation aux oscillations quand il est agi sur la surface de contact (9) conformément à l'usage prévu,
c) des moyens de mesure pour déterminer, particulièrement continument, des paramètres (f, $\ddot{x}_d$) de l'excitation aux oscillations de l'excitateur à balourd et la réponse aux oscillations ($x_d$) du corps de contact (6, 8) pendant une action sur la surface de contact (9) en présence d'une perte de contact irrégulière entre la surface de contact (9) et le corps de contact (6, 8), et
d) de moyens d'évaluation pour calculer, particulièrement continument, la rigidité ($k_B$) et/ou l'amortissement ($c_B$) de la région avec les paramètres (f, $\ddot{x}_d$) déterminés pendant l'action sur la surface de contact (9) en présence d'une perte de contact irrégulière entre la surface de contact (9) et le corps de contact (6, 8).

**19.** Dispositif (1) selon la revendication 18, **caractérisé en ce que** les moyens de mesure et les moyens d'évaluation sont formés de manière à être additionnellement appropriés à déterminer les paramètres (f, $\ddot{x}_d$) et à calculer la rigidité ($k_B$) et/ou l'amortissement ($c_B$) pendant une action sur la surface de contact (9) en présence d'une perte de contact régulière et/ou aucune perte de contact entre la surface de contact (9) et le corps de contact (6, 8).

**20.** Dispositif (1) selon l'une des revendications 18 à 19, **caractérisé en ce que** le dispositif (1) a des moyens pour visualiser la rigidité ($k_B$) et/ou l'amortissement ($c_B$), particulièrement un écran pour montrer une valeur numérique représentant la rigidité ($k_B$) et/ou l'amortissement ($c_B$) ou une barre, la longueur de laquelle représente la rigidité ($k_B$) et/ou l'amortissement ($c_B$).

**21.** Dispositif (1) selon l'une des revendications 18 à 20, **caractérisé en ce que** le corps de contact (6, 8) est formé par un outil (6, 8) pour travailler la région du corps (2).

**22.** Dispositif (1) selon la revendication 21, **caractérisé en ce que** le dispositif (1) est une plaque vibrante ou un rouleau vibrant (1), le corps de contact (6, 8) étant formé par la plaque de base de la plaque vibrante ou bien par le corps de rouleau (6, 8) du rouleau vibrant (1).

**23.** Dispositif (1) selon l'une des revendications 18 à 22, **caractérisé en ce que** l'excitateur à balourd est un vibrateur circulaire ou un vibrateur à action dirigée, particulièrement un vibrateur à action dirigée avec une direction réglable de la force d'excitation.

## Fig.1

## Fig.2

EP 2 627 826 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007096118 A